Europäisches Patentamt

European Patent Office

Office européen des brevets

(19)

(11) **EP 0 579 101 B1**

(12) **EUROPÄISCHE PATENTSCHRIFT**

(45) Veröffentlichungstag und Bekanntmachung des Hinweises auf die Patenterteilung:
**30.09.1998 Patentblatt 1998/40**

(51) Int Cl.6: **H04L 7/027**

(21) Anmeldenummer: **93110865.8**

(22) Anmeldetag: **07.07.1993**

(54) **Verfahren zur Schrittakt-Regeneration bei der Demodulation von digital modulierten Signalen und Anordnung zum Ausführen des Verfahrens**

Method of symbol clock recovery in the demodulation of digitally modulated signals and apparatus for its implementation

Procédé de récupération de l'horloge symbole dans la démodulation de signaux modulés numériquement et dispositif pour sa mise en oeuvre

(84) Benannte Vertragsstaaten:
**DE FR GB**

(30) Priorität: **14.07.1992 DE 4223132**

(43) Veröffentlichungstag der Anmeldung:
**19.01.1994 Patentblatt 1994/03**

(73) Patentinhaber: **Daimler-Benz Aerospace Aktiengesellschaft**
**81663 München (DE)**

(72) Erfinder:
• **Fink, Karl-Robert, Dipl.-Ing.**
  **D-73312 Geislingen (DE)**
• **Klemt, Reiner, Dipl.-Ing.**
  **D-89129 Langenau (DE)**
• **Biet, Bernhard, Dr.**
  **D-89077 Ulm (DE)**

(74) Vertreter: **Fröhling, Werner Otto, Dr. et al**
**Daimler-Benz Aerospace AG**
**Patentabteilung**
**Sedanstrasse 10**
**89077 Ulm (DE)**

(56) Entgegenhaltungen:
**US-A- 4 622 683**

• **PROAKIS 'Digital Communications' 1989 , MCGRAW - HILL BOOK COMPANY , NEW YORK * Seite 318 - Seite 322 ***
• **IEEE/IEICE GLOBAL TELECOMMUNICATIONS CONFERENCE 1987 15-18 November 1987, TOKYO, JP, & IEEE 1987, NEW YORK, US, Seiten 1345 - 1349 OERDER UND MEYER 'Digital filter and square timing recovery'**
• **IEEE TRANSACTIONS ON COMMUNICATIONS Bd. 34, Nr. 5 , Mai 1986 , NEW YORK US Seiten 423 - 429 GARDNER 'A BPSK/QPSK timing - error detector for sampled receivers'**
• **IEEE ACOUSTICS, SPEECH, AND SIGNAL PROCESSING MAGAZINE Bd. 40, Nr. 4 , April 1992 , NEW YORK US Seiten 834 - 844 YU HEN HU 'The quantizatioh effects of the CORDIC algorithm'**

## Beschreibung

Die Erfindung betrifft ein Verfahren zur Schrittakt-Regeneration bei der Demodulation von digital modulierten Signalen gemäß dem Oberbegriff des Patentanspruchs 1 sowie eine Anordnung zum Ausführen des Verfahrens gemäß dem Oberbegriff des Patentanspruchs 11.

Verfahren bzw. Anordnungen dieser Art werden im Bereich der Kommunikationstechnik beispielsweise in kooperativen bzw. nichtkooperativen digitalen Demodulatoren für digitale Signale mit harter oder weicher Tastung bzw. in Empfängern mit digitaler Zwischenfrequenzverarbeitung eingesetzt.

Digitale Übertragungsverfahren haben im Bereich der Kommunikationstechnik in den letzten Jahrzehnten stark an Bedeutung gewonnen. Die Gründe für die wachsende Verbreitung der digitalen Übertragungsverfahren sind der enorme Anstieg von bereits digital vorliegenden Quelldaten, der Trend zur digitalen Darstellung der ursprünglich analogen Quelldaten und nicht zuletzt die verstärkte Grundlagenforschung in der digitalen Signalverarbeitung. Die Übertragung von Nachrichten über große Entfernungen kann grundsätzlich entweder mit Hilfe breitbandiger Kabel, über Satelliten oder über den ionosphärischen Kurzwellen-Funkkanal (HF-Kanal) erfolgen. In der Vergangenheit war der HF-Kanal primär zur Übertragung von analogen Quellsignalen vorgesehen. Durch technologische Fortschritte bei der Entwicklung leistungsfähiger digitaler Signalprozessoren und deren Einsatz in modernen Empfängern können jedoch heutzutage komplizierte adaptive Regelungs- und Signalverarbeitungsverfahren zu durchaus akzeptablen Preisen realisiert werden, die zum Empfang und zur Demodulation von digital modulierten Sendungen im Kurzwellenbereich notwendig sind. Der HF-Kanal gewinnt somit verstärkt an Bedeutung als Medium zur Nachrichtenübertragung von digital modulierten Sendungen. Die Vorteile einer Nachrichtenübertragung über Kurzwelle liegen unter anderem im relativ geringen Aufwand, im geringen Zeitaufwand für den Verbindungsaufbau und in der Möglichkeit eines Mobilbetriebs. Es ist auch ein Datenfunk zwischen bewegten Fahrzeugen durchführbar. Aufgrund der möglichen Bandbreitenersparnis und günstiger Rauscheigenschaften kommen im Kurzwellenbereich verstärkt von den digitalen Modulationsverfahren phasengetastete Verfahren ("MPSK-Verfahren": $\underline{M}$-$\underline{P}$hase-$\underline{S}$hift-$\underline{K}$eying mit M=2, 4, 8, 16,...) zur Anwendung.

Im nachrichtentheoretischen Sinn bedeutet die Modulation eine Abbildung der Information in eine Signalform, die für eine Übertragung von Nachrichten über größere Entfernungen geeignet ist. Die Information wird dabei einem Trägersignal aufgeprägt, das dann entweder als geführte Welle innerhalb eines Wellenleiters (Kabel) oder als abgestrahlte Welle zum Nachrichtenempfänger gelangt. Im Empfänger wird das modulierte Signal entweder direkt auf der Empfangsfrequenz oder bei einer Zwischenfrequenzlage demoduliert. Die Demodulation bedeutet dabei die bestmögliche Rückgewinnung der ursprünglichen Information und ist als inverser Vorgang zur Modulation aufzufassen. Man unterscheidet grundsätzlich analoge, d.h. zeit- und wertekontinuierliche von digitalen, d.h. zeit- und zustandsdiskrete Modulationsverfahren.

Im Gegensatz zu den analogen Modulationsverfahren werden bei den digitalen Verfahren binäre Zustände zur Modulation des Trägersignals verwendet. Die binären Zustände des Quelldatenstroms werden als diskrete Kennzustände des Trägersignals dargestellt. Man spricht dann von Umtastverfahren (Shift Keying), die entsprechend den analogen Modulationsverfahren in ASK ($\underline{A}$mplitude-$\underline{S}$hift-$\underline{K}$eying), FSK ($\underline{F}$requency-$\underline{S}$hift-$\underline{K}$eying) und PSK ($\underline{P}$hase-$\underline{S}$hift-$\underline{K}$eying) zu unterteilen sind. Die Schrittgeschwindigkeit bzw. der Schrittakt ("Symbolrate") $f_{Bd}$ des digitalen Modulationsverfahrens gibt die Anzahl der Kennzustandswechsel pro Sekunde an und hat die Maßeinheit Baud (Bd). Bei harter Umtastung zwischen den Kennzuständen ist das Signal frei von Intersymbolinterferenzen, hat jedoch ein unendlich breites Frequenzband und ist somit für eine Übertragung weniger gut geeignet. Abhilfe kann durch weiche Tastung bei Beachtung der zweiten Nyquistbedingung erreicht werden. Diese besagt, daß die Maxima und die Nulldurchgänge einer Impulsfolge erhalten bleiben, wenn ihr Spektrum eine abfallende Flanke besitzt, die symmetrisch zur Grenzfrequenz verläuft. Mit Hilfe einer Impulsformung des modulierenden, komplexen Basisbanddatensignals durch ein spezielles Filter (Root-Raised-Cosine-Filter) und die Verwendung eines entsprechenden Optimalfilters im Empfänger können Intersymbolinterferenzen vermieden werden bei einer zusätzlichen Beschränkung der notwendigen Übertragungsbandbreite $B_{DSB}$ auf (DSB:=$\underline{D}$ouble-$\underline{S}$ideband):

$$B_{DSB} = (1 + \alpha) \cdot f_{Bd} \qquad (1)$$

mit dem Roll-off-Faktor $\alpha$ und der Symbolrate $f_{Bd}$.

Große Bedeutung haben heutzutage die PSK-Verfahren im Satellitenfunk, im Richtfunk und bei kabelgebundenen Kommunikationssystemen gefunden, und zwar aufgrund ihrer geringeren Empfindlichkeit gegenüber Rauschstörungen. Für die gleiche Fehlerwahrscheinlichkeit der demodulierten Daten bei jeweils vorausgesetzten Optimalempfängerstrukturen benötigen diese Verfahren einen geringeren Störabstand als konventionelle FSK- und ASK-Verfahren. Bei den PSK-Verfahren müssen beide Seitenbänder übertragen werden. Der Träger ist unterdrückt und muß bei der Demodulation durch spezielle Verfahren zurückgewonnen werden. Durch eine Erhöhung der Kennzustände (MPSK, M = 4, 8, 16...) kann eine Bandbreitenersparnis erfolgen. Zur Anwendung kommen in der Regel Verfahren der Bezugs- und der Differenzkodierung. Letztere haben den Vorteil, daß sie zur Demodulation nur eine AFC (Automatic-Frequency-Control)-Schaltung zur Schätzung der Trägerfrequenz benötigen. Die Zweiphasenumtastung, BPSK (Binary-Phase-Shift-Keying) oder B-DPSK (Binary-Differential-Phase-Shift-Keying), wird aufgrund ihres großen Bandbreitenbedarfs seltener verwendet. In modernen Kommunikationssystemen kommen hauptsächlich höherstufige PSK-Verfahren zur Anwendung, die für die gleiche Übertragungsrate weniger Bandbreite benötigen. Alle mehrwertigen Verfahren müssen immer taktgebunden durchgeführt werden, damit die notwendige Serienparallelwandlung im Sender und die Parallelserienwandlung im Empfänger ermöglicht werden können. Bei der Umsetzung des Basisbanddatenstromes in den Symboldatenstrom wird häufig die Gray-Kodierung verwendet, damit bei Verfälschungen des Signals von einem Entscheidungsbereich in den anderen immer nur ein Bitfehler auftreten kann. Mit Hilfe eines MPSK-Modulators werden dann daraus die komplexen MPSK-Symbole $\exp(j2\pi k/M)$ gebildet, die die entsprechenden Phasenzustände definieren. Die notwendige Impulsformung zur weichen Tastung geschieht durch Filterung der komplexen MPSK-Symbole z.B. mit Hilfe eines Root-Raised-Cosine-Filters. Große Verbreitung finden bei den mehrstufigen Verfahren die quaternären Verfahren QPSK (Quaternary-Phase-Shift-Keying), die bei der gleichen Kanalbandbreite einer BPSK-Sendung doppelt so viele Daten pro Zeiteinheit übertragen können und dafür einen um 3 dB verbesserten Störabstand benötigen. Es sind auch Verfahren zur Vierphasenumtastung bekannt, bei denen die 180°-Sprünge aus zwei 90°-Phasensprüngen zusammengesetzt werden, die im Abstand der halben Schrittgeschwindigkeit stattfinden. Diese Offset-QPSK-Verfahren haben Vorteile bezüglich der optimalen Aussteuerung der Übertragungssysteme.

Bei herkömmlichen, analogen Empfängern erfolgen die erforderliche Hauptselektion und die Demodulation der Empfangssignale üblicherweise in einer niedrigeren Zwischenfrequenz(ZF)-Lage, da dort die notwendigen Filter in höherer Güte und die Demodulation mit geringerem Aufwand realisiert werden können. Das ZF-Signal liegt dabei als reelles Bandpaßsignal bei der Mittenfrequenz $f_{ZF}$ vor. Aufgrund der Spiegelfrequenzproblematik kann die ZF-Lage jedoch nicht beliebig erniedrigt werden. Eine digitale Demodulation z.B. von PSK-Sendungen im Kurzwellenbereich ist jedoch wegen der relativ geringen Bandbreite von $B_{PSK} < 5$ kHz mit vertretbarem Rechenaufwand denkbar. Mit Hilfe eines Quadraturempfängers ist es möglich, z.B. ein 0-ZF-PSK-Signal ("Basisbandsignal") mit sehr geringer Restträgerfrequenz $f_R$ zu erzeugen, das zur digitalen Weiterverarbeitung hervorragend geeignet ist.

Der Quadraturempfänger unterscheidet sich vom Synchronempfänger durch fehlende Synchronisation der Oszillatorfrequenz $f_O$ mit der Empfangsfrequenz $f_{ZF}$. Das reelle Bandpaßsignal in der Zwischenfrequenzlage $f_{ZF}$ wird komplex in die 0-ZF-Lage gemischt. Dies geschieht durch Multiplikation des reellen Bandpaßsignals mit einem komplexen Zeiger

$$s_0(t) = \exp(-j\omega_0 t) = \cos(\omega_0 t) - j \cdot \sin(\omega_0 t). \qquad (2)$$

Im Spektralbereich entspricht dies einer Verschiebung des symmetrischen Bandpaßspektrums nach annähernd 0 Hz. Das Empfangssignal liegt dann als komplexes Basisbandsignal in 0-ZF-Lage vor mit einer unvermeidlichen Restträgerfrequenz von

$$f_R = |f_0 - f_{ZF}| \ll B. \qquad (3)$$

Das komplexe Basisbandsignal gelangt nach der Kanalentzerrung bzw. Filterung zu den Funktionseinheiten Trägerrückgewinnung und Schrittakt-Regeneration. Die Funktionseinheit zur Trägerrückgewinnung hat die Aufgabe, die Trägerfrequenz und -phase der Sendung zu schätzen und - nach Bestimmung der Frequenz - die Phase mit Hilfe eines Phasendrehgliedes zu eliminieren. Damit ist es möglich, das sich mit der Restträgerfrequenz $f_R$ drehende Koordinatensystem der I-Q-Basisbandsignale zum Stillstand zu bringen.

Die Funktionseinheit der Schrittakt-Regeneration liefert Schätzwerte für die unbekannte Frequenz- und Phasenlage $f_{Bd}$ bzw. $\tau$ des Schrittaktes. Mit Hilfe des regenerierten Schrittaktes werden in einem Entscheider, der eine zusätzliche Interpolationseinheit vorgeschaltet haben kann, aus den I-Q-Signalen die Symbole abgeleitet. Die Symbole können dann synchron zum Schrittakt mit Hilfe einer Phasen- oder Augendiagrammdarstellung hinsichtlich ihrer Dekodierungsgüte beurteilt werden. Die I-Q-Signale können auch vor dem Entscheider mit Hilfe einer Augendiagrammdarstellung hinsichtlich des optimalen Entscheidungszeitpunktes untersucht werden.

Die Verfahren zur Trägerrückgewinnung und zur Schrittakt-Regeneration können entweder mit Hilfe rekursiver oder nichtrekursiver Verfahren realisiert werden. Die rekursiven Verfahren werden häufig auch als Feedback(FB)-Verfahren gekennzeichnet. Dabei wird das Maximum der Log-Likelihood-Funktion mit Hilfe der Nullstelle ihrer 1. Ableitung berechnet. Diese Vorgehensweise bildet sich in rekursiven Strukturen ab, bei denen mit Hilfe eines Fehlerdetektors eine Fehlergröße definiert wird, die innerhalb der Rekursion zu null optimiert wird. Auf diese Weise wird z.B. mit Hilfe eines Gradientenverfahrens die Nullstelle der 1. Ableitung der Log-Likelihood-Funktion der Träger- und Schrittaktschätzung gefunden. Die FB-Verfahren haben den Vorteil, daß sie auch geringfügige Änderungen der Trägerphase und des Symboltimings erfassen können.

Weiterhin können sie bei entsprechender Dimensionierung Frequenzoffsets und sogar zeitlich veränderliche Frequenzabweichungen ausregeln. Liegt der Initialisierungszustand in der Nähe eines instabilen Punktes der Fehlerdetektorkennlinie und ist außerdem die Rückstellkraft gering, so kann der Rastvorgang unter Umständen lange Zeit benötigen. Man bezeichnet diese Akquisitionsprobleme mit "Hangups".

Die Schrittakt-Regeneration kann unabhängig oder abhängig von der Trägerrückgewinnung erfolgen.

Die sogenannten Timing-Error-Verfahren zur Schrittakt-Regeneration beispielsweise sind hauptsächlich für einen seriellen Betrieb geeignet, d.h. es hat zuerst eine Trägerrückgewinnung zu erfolgen und erst danach kann mit Hilfe der Ausgangsdaten des Demodulators eine Rekonstruktion des Schrittaktes erfolgen. Im Unterschied zu den spektralen Verfahren, die ihre Regelinformation aus dem Spektrum ableiten, verwenden die Timing-Error-Verfahren Informationen aus dem zeitlichen Verlauf der Symbolfolge zur Gewinnung der Regelinformation. Zum optimalen Funktionieren der Timing-Error-Verfahren werden symmetrische Symbolimpulse vorausgesetzt. Es ist deshalb von besonderer Wichtigkeit, daß das I-Q-Signal des Demodulators durch ein Matched-Filter von Intersymbolinterferenzen weitgehend befreit wurde. Solange die Verzerrungen aufgrund der Verwendung eines vom Optimalfilter abweichenden Vorfilters zu symmetrischen Änderungen der Form der Symbole führen, halten sich die Verluste aufgrund der nicht optimalen Schrittakt-Regeneration in Grenzen. Die Empfindlichkeit der Timing-Error-Verfahren gegenüber Symbolverzerrungen ist bei nichtkooperativem Empfang von PSK-Sendungen besonders zu beachten.

Das von GARDNER (vgl. hierzu: F.M. Gardner: "A BPSK/QPSK Timing-Error-Detector for Sampled Receivers"; in: IEEE Transactions on Communications, vol. COM-34, No. 5, May 1986, S. 423-429) vorgeschlagene Verfahren beispielsweise setzt die genaue Kenntnis der Frequenzlage des Schrittaktes voraus. Es dient in erster Linie dazu, das exakte Symbol-Timing zu rekonstruieren und damit die Symbolentscheidung im Augenmaximum zu ermöglichen. Das Gardner-Verfahren ist für den AWGN-Kanal (AWGN: Additive-White-Gaussian-Noise) entwickelt worden, d.h. für geringe, symmetrische Symbolverzerrungen. Das Error-Signal des Timing-Error-Detektors wird aus zwei Abtastwerten pro Symbol gebildet. Mit Hilfe des Fehlersignals wird in einer Regelschleife eine Abtaststeuerung in der Art vorgenommen, daß der optimale Entscheidungszeitpunkt im Augenmaximum erreicht wird. Bei diesem Verfahren ist das Regelsignal unabhängig von langandauernden 1- bzw. 0-Folgen (z.B. bei NRZ(No-Return-to-Zero)-codierten Verfahren).

Der Timing-Error-Detektor des Verfahrens nach Gardner hat eine sinusförmige Detektorkennlinie. Es handelt sich dabei um einen Timing-Error-Detektor mit Gedächtnis. Dies ist besonders bei der Dimensionierung der rekursiven Struktur des Verfahrens zu beachten. Durch den zusätzlichen Pol der Übertragungsfunktion müssen mit Hilfe des Wurzelortskurvenverfahrens die Stabilität und die Dynamik des Verfahrens zur Schrittakt-Regeneration definiert werden. Des weiteren ist zu beachten, daß selbst bei rauschfreien I-Q-Eingangssignalen bei der Bildung des Fehlersignals ein inhärentes Eigenrauschen entsteht. Dieses "Self-Noise" beschränkt die Größe der Akquisitionsintervalle des Verfahrens.

Das Verfahren nach Gardner arbeitet bei variablem Abtasttakt und erfordert bei einer vollständigen digitalen Realisierung einen Interpolator. Die Frequenzlage des Schrittaktes muß hinreichend genau bekannt sein. Besonders nachteilig wirken sich Symbolverzerrungen aus, wie sie z.B. bei Abweichungen von der Optimalfilterung und bei schwierigen Kanalsituationen (HF-Kanal) entstehen.

Das Early-Late-Verfahren (vgl. hierzu: J.G. Proakis: "Digital Communications" (McGraw-Hill Book Company, 1989) S. 318-322) bildet mit Hilfe der verschobenen Symbolflächen ein Korrektursignal für das Symboltiming. Dabei handelt es sich um das gleiche Funktionsprinzip, das bereits anhand des von Gardner vorgeschlagenen Verfahrens verdeutlicht wurde. Das Korrektursignal $\varepsilon_k$ des Timing-Error-Detektors des Early-Late-Verfahrens wird mittels zweier Integrationen über die Symboldauer gebildet.

Die beiden Integrationen sind dabei zeitlich um T/4 zueinander verschoben. Es kann für den I- und Q-Pfad einzeln eine Korrektur gebildet werden, die dann zum eigentlichen Fehlersignal $\varepsilon_k$ zusammengesetzt werden. Bei BPSK-Verfahren wird nur der I-Pfad ausgewertet. Aufgrund des integrativen Verhaltens des Early-Late-Detektors bei der Bildung des Fehlersignals ist das inhärente Eigenrauschen gering. Der Timing-Error-Detektor des Early-Late-Verfahrens hat Gedächtnis, was besonders bei der Dimensionierung des Verfahrens zu beachten ist. Das Verfahren erfordert eine vorausgehende Trägerrückgewinnung (PSK-Demodulation) und benötigt die genaue Kenntnis der Symbolsignalform (Symbol waveform generator), um die erforderlichen Autokorrelationen berechnen zu können.

In dem Buch von Proakis werden ferner spektrale Verfahren zur Schrittakt-Regeneration vorgestellt, die bei festem Schrittakt arbeiten. Die vorgestellten Verfahren benötigen genaue Vorkenntnis der Symbolform und der Frequenzlage des Schrittaktes. Es wird daher eine vorausgehende Trägerrückgewinnung benötigt. Somit ist kein entkoppelter Parallelbetrieb der Schrittakt-Regeneration und Trägerrückgewinnung mit diesem Verfahren möglich.

In dem Buch von B. Sklar: "Digital Communications - Fundamentals and Applications" (Prentice-Hall International Editions, 1988) S. 453-460 werden schließlich Open-Loop und Close-Loop-Symbol-Synchronisationsverfahren vorgestellt. Die Open-Loop-Strukturen stellen spektrale Verfahren dar, die mit Hilfe eines schmalen Bandpaßfilters bei fester Schrittaktfrequenz die momentane Spektrallinie des Schrittaktes aus dem Spektrum herausfiltern. Mit Hilfe einer Nichtlinearität wird die spektrale Komponente bei der Schrittaktfrequenz $f_{Bd}$ erzeugt. Durch eine nachfolgende Vorzeichenbildung wird der Symboltakt generiert. Die Close-Loop-Verfahren werden mit Hilfe der bereits beschriebenen Early-Late-Struktur realisiert. Es handelt sich dabei um Timing-Error-Verfahren, die bei einer digitalen Realisierung einen Interpolator und eine hohe Überabtastung zur Berechnung der Integralausdrücke erfordern. Bei dem Early-Late-Verfahren wird eine gleichmäßige Energieverteilung innerhalb des Symbols vorausgesetzt. Symbolverzerrungen führen somit zu Fehlern bei der Rekonstruktion des Symbol-Timings. Dieses Early-Late-Verfahren hat somit als Timing-Error-Verfahren ähnliche Nachteile wie sie bereits beim Verfahren nach Gardner erläutert wurden. Sowohl die in dem Buch von B. Sklar beschriebenen Open-Loop- als auch die dort beschriebenen Close-Loop-Verfahren benötigen eine vorausgehende Trägerrückgewinnung.

Die Aufgabe der Erfindung besteht darin, zum einen ein Verfahren zur Schrittakt-Regeneration anzugeben, das auch ohne Kenntnis der Trägerfrequenz des digital modulierten Trägersignals arbeitet und dennoch auf einer vollständigen digitalen Basis eine Schrittakt-Regeneration ermöglicht, und zum andern eine Anordnung anzugeben, mit der ein solches Verfahren ohne großen Aufwand sicher durchgeführt werden kann.

Die erfindungsgemäße Lösung dieser Aufgabe ist in bezug auf das zu schaffende Verfahren durch die kennzeichnenden Merkmale des Anspruchs 1 und in bezug auf die zu schaffende Anordnung durch die kennzeichnenden Merkmale des Anspruchs 11 wiedergegeben. Die übrigen Ansprüche enthalten vorteilhafte Aus- und Weiterbildungen des erfindungsgemäßen Verfahrens (Ansprüche 2 bis 10) bzw. der erfindungsgemäßen Anordnung (Ansprüche 12 bis 20) sowie bevorzugte Anwendungen der Erfindung (Ansprüche 21 bis 22).

Das erfindungsgemäße Verfahren ist in die Gruppe der spektralen Verfahren zur Schrittakt-Regeneration bei der Demodulation von digital modulierten Trägersignalen einzuordnen und ist durch folgende Verfahrensschritte gekennzeichnet:

- das mit einem digitalen Modulationssignal von zunächst unbekannter Schrittaktfrequenz $f_{Bd}$ und -phase $\tau$ modulierte Trägersignal wird in ein digitales, vorgefiltertes erstes komplexes Basisbandsignal (0-ZF-Signal) umgesetzt;

- mit Hilfe einer Nichtlinearität wird der Betrag oder das Betragsquadrat des ersten komplexen Basisbandsignals gebildet;

- mit Hilfe einer digitalen Filtereinheit werden die spektralen Signalanteile des Betrags- oder Betragsquadratsignals außerhalb eines vorgegebenen Frequenzbereichs um die geschätzte Schrittaktfrequenz $f_{Bd}$ herum, insbesondere der spektrale Signalanteil bei der Frequenz Null unterdrückt oder zumindest weitgehend unterdrückt;

- mit Hilfe eines komplexen Trackingfilters werden (wird) in einem teilweise oder vollständig rekursiv ablaufenden Regelprozeß anhand des reellen Ausgangssignals der digitale Filtereinheit die Schrittaktfrequenz $f_{Bd}$ und/oder -phase $\tau$ geschätzt und dabei die jeweiligen Schätzwerte für Schrittaktfrequenz und/oder -phase $f_{Bd}$, $\tau$ sukzessive mit den tatsächlichen Werten für Schrittaktfrequenz und/oder -phase $f_{Bd}$, $\tau$ in Übereinstimmung gebracht oder zumindest annähernd in Übereinstimmung gebracht;

- anhand der Schätzwerte für Schrittaktfrequenz und/oder -phase $f_{Bd}$, $\tau$ wird in einer Signalerzeugungseinheit ein entsprechendes Schrittaktsignal (S) erzeugt.

In einer vorteilhaften Ausführungsform des erfindungsgemäßen Verfahrens ist vorgesehen:

- daß ein hinreichend genauer Start-Schätzwert der Schrittaktfrequenz $f_{Bd}$ und -phase $\tau$ vorgegeben wird;

- daß im komplexen Trackingfilter:

  - ein erstes Referenzsignal mit einer diesem Start-Schätzwert entsprechenden Frequenz erzeugt wird;
  - das reelle Ausgangssignal der digitalen Filtereinheit mit diesem ersten Referenzsignal komplex gemischt wird und dadurch in eine angenäherte O-ZF-Lage verschoben wird mit einem Restschrittaktsignal zunächst unbekannter Frequenz $f_r$ und Phase $\zeta_r$ sowie mit frequenzverschobenen Spektralanteilen bei $f_r - 2f_{Bd} \approx -2f_{Bd}$;
  - mit Hilfe einer Tiefpaßfiltereinheit zum einen die frequenzverschobenen Spektralanteile bei $\approx -2f_{Bd}$ unterdrückt werden und zum anderen das Signal-Rausch-Verhältnis im 0-ZF-Lage-Signal selbst verbessert wird;
  - aus dem so erzeugten zweiten komplexen Basisbandsignal mit Hilfe eines digitalen Phase-Looked-Loops in einem rekursiven Regelprozeß Frequenz $f_r$ und/oder Phase $\zeta_r$ des Restschrittaktsignals geschätzt werden (wird) und dabei die jeweiligen Schätzwerte für Frequenz $f_r$ und/oder Phase $\zeta_r$ des Restschrittaktsignals sukzessive mit den tatsächlichen Werten für Frequenz $f_r$ und/oder Phase $\zeta_r$ des Restschrittaktsignals in Übereinstimmung oder zumindest annähernd in Übereinstimmung gebracht werden (wird);

- daß die mit Hilfe des digitalen Phase-Locked-Loops gewonnenen Schätzwerte für die Frequenz $f_r$ und/oder Phase $\zeta_r$ des Rest-Schrittaktsignals mit dem Start-Schätzwert der Schrittaktfrequenz $f_{Bd}$ und -phase $\tau$ zusammengeführt werden und aus diesen Schätzwerten die Schätzwerte für die Schrittakt-frequenz $f_{Bd}$ und/oder -phase $\tau$ gebildet werden (wird).

In einer bevorzugten Ausgestaltung dieser Ausführungsform ist vorgesehen:

- daß in dem digitalen Phase-Locked-Loop das zweite komplexe Basisbandsignal mit einem zweiten Referenzsignal der Frequenz $f_v$ und der Phase $\zeta_v$ komplex quadraturgemischt wird;

- daß in einem rekursiven Regelprozeß zunächst die durch die komplexe Quadraturmischung erzeugten In-Phase- und Quadratur-Signale von der karthesischen Koordinatendarstellung in eine durch Betrag und Phase dieser Signale charakterisierte Polarkoordinatendarstellung transformiert werden, daß anschließend aus dem so erzeugten Phasenfehlersignal $\varepsilon_k$ ein Regelsignal abgeleitet wird, mit dem Frequenz $f_v$ und Phase $\zeta_v$ des zweiten Referenzsignals sukzessive mit der Frequenz $f_r$ und Phase $\zeta_r$ des Restschrittakt-Signals in Übereinstimmung oder zumindest annähernd in Übereinstimmung gebracht wird.

Als besonders vorteilhaft hat es sich erwiesen, wenn die Koordinatentransformation der In-Phase- und Quadratur-Signale von der karthesischen Koordinatendarstellung in die Polarkoordinatendarstellung mit Hilfe des an sich bekannten CORDIC-Algorithmus (vgl. hierzu z.B.: Yu Hen Hu: "The Quantization Effects of the CORDIC Algorithm"; in: IEEE Transact. on Signal Processing, Vol. 40, April 1992, S. 834-844) durchgeführt wird bzw. der Betrag des ersten komplexen Basisbandsignals mit Hilfe einer Koordinatentransformation des ersten komplexen Basisbandsignals von der karthesischen Koordinatendarstellung in eine durch Betrag und Phase dieses Signals charakterisierte Polarkoordinatendarstellung gewonnen wird, wobei auch hier es besonders vorteilhaft ist, wenn die Koordinatentransformation des ersten komplexen Basisbandsignals von der karthesischen Koordinatendarstellung in die Polarkoordinatendarstellung mit Hilfe des CORDIC-Algorithmus durchgeführt wird (CORDIC steht für Coordinate-Rotation-Digital-Computer).

Für die Anordnung zur Schrittakt-Regeneration bei der Demodulation von digital moduliertern Trägersignalen zum Durchführen des erfindungsgemäßen Verfahrens wird nach der Erfindung vorgeschlagen,

- daß eine Einheit zur Umsetzung des mit einem digitalen Modulationssignal modulierten Trägersignals in ein erstes digitales, vorgefiltertes, komplexes Basisbandsignal vorgesehen ist und daß diese Einheit ein komplexes Vorfilter aufweist;

- daß eine Nichtlinearität zur Bildung des Betrags oder des Betragsquadrats des ersten komplexen Basisbandsignals vorgesehen ist;

- daß diese Nichtlinearität eingangsseitig an das komplexe Vorfilter für das erste komplexe Basisbandsignal und ausgangsseitig an eine digitale Filtereinheit zur Hoch- oder Bandpaßfilterung des Betrags- oder Betragsquadratsignals angeschlossen ist;

- daß die digitale Filtereinheit ausgangsseitig mit einem komplexen Trackingfilter zur Schätzung der Schrittaktfrequenz $f_{Bd}$ und/oder -phase $\tau$ verbunden ist;

- daß das komplexe Trackingfilter ausgangsseitig mit einer Signalerzeugungseinheit zur Erzeugung des Schrittaktsignals verbunden ist;

Dabei sind die Filterparameter der digitalen Filtereinheit so gewählt, daß die spektralen Signalanteile in der unmittelbaren Umgebung um die geschätzte Schrittaktfrequenz $f_{Bd}$ herum nur wenig oder gar nicht gedämpft werden.

In einer vorteilhaften Ausführungsform ist vorgesehen,

- daß das Trackingfilter einen komplexen Mischer, einen ersten steuerbaren Referenzoszillator, eine komplexe Tiefpaßfiltereinheit, einen digitalen Phase-Locked-Loop sowie ein Summationsglied enthält;

- daß der komplexe Mischer eingangsseitig zum einen mit dem Ausgang der digitalen Filtereinheit und zum anderen mit dem Ausgang des ersten Referenzoszillators verbunden ist und ausgangsseitig an die komplexen Tiefpaßfiltereinheit angeschlossen ist;

- daß der digitale Phase-Locked-Loop eingangsseitig mit der komplexen Tiefpaßfiltereinheit und ausgangsseitig mit dem Summationsglied verbunden ist;

- daß der Start-Schätzwert der Schrittaktfrequenz $f_{Bd}$ und -phase $\tau$ zum einen auf den Steuereingang des ersten Referenzoszillators gegeben ist und zum anderen dem Summationsglied zugeführt ist;

- daß das Summationsglied ausgangsseitig mit der Signalerzeugungseinheit verbunden ist.

Wesentliche Vorteile des erfindungsgemäßen Verfahrens insbesondere bei Verwendung eines mit dem CORDIC-Algorithmus arbeitenden digitalen Phase-Locked-Loops ("CORDIC-Loop") sind:

- die Filter zur Unterdrückung der doppelten Frequenz bei ≈ -2f$_{Bd}$ bei gerastetem Loop sind außerhalb des CORDIC-Loops mit der Folge, daß keine Beeinflußung der Loop-Dynamik gegeben ist;

- die Loop-Dynamik ist unabhängig von der Relativamplitude des Hüllkurvensignals;

- durch die Tiefpaßfilter wird der Signal-Rausch-Abstand am Eingang des Loops verbessert;

- Arbeitsweise bei fester Abtastrate;

- mögliche Abtastratenreduktion auf f$_A$' = (8...10)f$_{Bd}$;

- geringe Empfindlichkeitseinbuße bei Abweichungen von der Optimalfilterung;

- ein Interpolator ist nicht zwingend erforderlich;

- keine vorhergehende Trägerrückgewinnung zwingend erforderlich;

- verhältnismäßig geringe Verluste bei nicht optimaler Filterung;

- Möglichkeit einer exakten Dimensionierung des Akquisitions- und Schwellwertverhaltens.

Das Verfahren zur Schrittakt-Regeneration verwendet - wie bereits erwähnt - entweder den Betrag (Hüllkurve) oder das Betragsquadrat (Energiesignal) der komplexen Ausgangsdaten eines Vorfilters. Es kann natürlich auch das I-Q-Signal am Ausgang der Schaltung zur Trägerrückgewinnung verwendet werden. Das Vorfilter ist bei kooperativem Empfang das entsprechende Matched-Filter zum Sendefilter. Bei nichtkooperativem Empfang entspricht es dem der PSK-Bandbreite angepaßten Hauptselektionsfilter. Das Betragssignal wird bei Verwendung des CORDIC-Loops in der Phasenebene zur Trägerrückgewinnung mit Hilfe des CORDIC-Algorithmus parallel zur Phase berechnet. Bei der Verwendung anderer Verfahren zur Trägerrückgewinnung kann durch Quadrierung des Realteils und des Imaginärteils des komplexen 0-ZF-Signals mit anschließender Summation das Energiesignal recht einfach berechnet werden. Das Energiesignal zeigt ebenso wie der Betrag bei bandbegrenzten Systemen Amplitudeneinbrüche im Rhythmus des Schrittaktes. Mit Hilfe der digitalen Filtereinheit wird die spektrale Energie im Bereich der Schrittakt-Frequenz f$_{Bd}$ maximiert. Die so gewonnene reelle Ausgangsgröße der digitalen Filtereinheit ist die Eingangsgröße eines komplexen Trackingfilters, mit dessen Hilfe die eigentliche Schätzung des Symboltimings τ erfolgt. Aufgrund der Einflüsse der Nichtlinearität entstehen energiereiche Oberwellen der Schrittakt-Frequenz. In einer bevorzugten Ausführungsform der Erfindung wird daher mit Hilfe einer komplexen Mischung das Spektrum des reellen Filtersignals in die 0-ZF-Lage verschoben. Dies geschieht aufgrund der Vorkenntnis von der ungefähren Frequenz f$_{Bd}$ des Schrittaktes. Der komplexe Signalzeiger liegt dann in 0-ZF-Lage vor und dreht sich mit der Winkelgeschwindigkeit der verbleibenden Fehlabstimmung. Mit Hilfe zweier schmaler Tiefpaßfilter werden die störenden Oberwellen des Schrittaktes unterdrückt und der Signal-Rausch-Abstand wesentlich verbessert. Die Synchronisation auf den so erzeugten komplexen Signalzeiger der verbliebenen Fehlabstimmung f$_r$ erfolgt vorzugsweise mit Hilfe des digitalen Phase-Locked-Loops z.B. in Form eines CORDIC-Loops ohne Pegeleinkopplung. Der Loop ohne Pegeleinkopplung ist bei dieser Anwendung zweckmäßig, weil die Amplitudeneinbrüche z.B. im Energiesignal in Abhängigkeit von den jeweiligen Systemrandbedingungen unterschiedlich ausfallen können und somit die Loop-Dynamik stark beeinflußen würden. Durch Zusammenführung des Regelsignal des Loops und des Start-Schätzwertes für die Schrittaktfrequenz und -phase kann eine Schätzung des Symboltimings τ erfolgen. Aufgrund der Verzögerungen in der Anordnung zur Schrittakt-Regeneration muß anschließend die optimale Phasenlage zur Entscheidung im Augenmaximum der Symbole als feste Verzögerung Δτ eingestellt werden. Der Loop arbeitet als komplexes, schmalbandiges Bandfilter für den Signalzeiger der Fehlabstimmung.

Die Funktion des spektralen Verfahren zur Schrittakt-Regeneration hängt stark davon ab, wieviel Taktinformation im gesendeten Signal vorhanden ist. Bei PSK-Signale z.B. kann die Taktinformation in Abhängigkeit von der verwendeten Kodierung recht unterschiedlich im PSK-Signal enthalten sein. Man ist natürlich auf der Sendeseite bestrebt, möglichst viel Taktinformation mit dem Signal zu übertragen. Bei RZ- und Manchester-Kodierung beispielsweise ist die Taktinformation optimal im Sendesignal vorhanden, hingegen treten bei NRZ-Kodierung aufgrund der möglichen Folgesequenzen ohne Zustandswechsel Verluste bei der Rekonstruktion der Taktinformation auf. Der eingangsseitige Signal-Rausch-Abstand des CORDIC-Loops zur Restzeigersynchronisation wird dabei durch die Bandbreite der Tiefpaßfilter und die relative Amplitude des Energiesignals bestimmt.

Existieren nur geringe Einbrüche im Betragsverlauf oder im Verlauf des Energiesignals, so ist der Abstand zwischen der spektralen Komponente bei der Schrittakt-Frequenz f$_{Bd}$ und dem Bezugsrauschen gering. Um genügend Verbesserung im Signal-Rausch-Abstand zu erzielen, muß der CORDIC-Loop in einem solchen Fall in seiner Loopbandbreite stark eingeschnürt werden. Der Signal-Rausch-Abstand vor dem Loop hängt von der Art des verwendeten Vorfilters ab. Die relative Amplitude des Energiesignals wird durch die Bandbreite und die Filterselektionsdaten des Vorfilters bestimmt.

Durch entsprechend schmalbandige Dimensionierung des CORDIC-Loops zur Schrittakt-Regeneration kann auch bei niedrigen Signal-Rausch-Verhältnissen vor dem Loop eine erfolgreiche Schrittakt-Regeneration erfolgen.

Die Bandbreite der Tiefpaßfiltereinheit sollte dem Fangbereich $\Delta f_L$ der Anordnung angepaßt werden. Der maximal mögliche Fangbereich ist damit abhängig von der Frequenz $f_{Bd}$ des Schrittaktes.

Im folgenden wird die Erfindung anhand der Figuren näher erläutert. Es zeigen:

FIG. 1 eine bevorzugte Ausführungsform der erfindungsgemäßen Anordnung zum Durchführen des erfindungsgemäßen Verfahrens;

FIG.2-3 vorteilhafte Ausgestaltungen der Nichtlinearität der Anordnung gemäß FIG. 1;

FIG. 4 Frequenzspektren verschiedener Signale, die in einzelnen Baugruppen der Anordnung gemäß FIG. 1 gebildet werden;

FIG. 5 eine vorteilhafte Ausgestaltung des Trackingfilters und der Signalerzeugungseinheit der Anordnung gemäß FIG. 1.

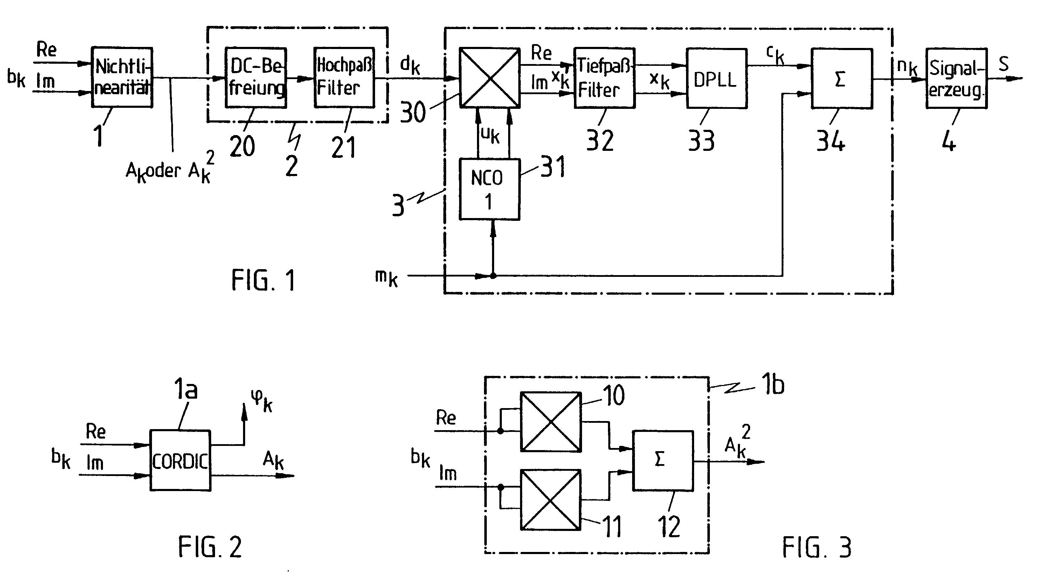

Die Anordnung in FIG. 1 umfaßt vier hintereinander geschaltete Hauptbaugruppen, nämlich eine Nichtlinearität 1, eine digitale Filtereinheit 2, ein komplexes Trackingfilter 3 sowie eine Signalerzeugungseinheit 4.

Eingangsseitig ist die Nichtlinearität 1 an die Ausgänge eines (nicht gezeigten) komplexen Vorfilters angeschlossen. Dies kann bei kooperativem Empfang ein an den Sender angepaßtes Matched- oder Optimal-Filter sein bzw. bei nichtkooperativem Empfang ein an die Bandbreite der digitalen Modulation angepaßtes Hauptselektionsfilter.

Die Nichtlinearität 1 ist ausgangsseitig an die digitale Filtereinheit 2 angeschlossen, die aus einer Einheit 20 zur Unterdrückung des Gleichanteils (spektraler Signalanteil bei Frequenz Null) des Ausgangssignals $A_k$ bzw. $A_k^2$ der Nichtlinearität 1 besteht sowie aus einem nachgeschalteten Hochpaßfilter 21. Anstelle des Hochpaßfilters 21 kann natürlich auch ein entsprechend dimensioniertes Bandpaßfilter verwendet werden.

Die digitale Filtereinheit 2 ist ausgangsseitig an das komplexe Trackingfilter 3 angeschlossen.

Das Trackingfilter enthält einen komplexen Mischer 30, der eingangsseitig zum einen an den Ausgang der digitalen Filtereinheit 2 und zum andern an den Ausgang eines ersten steuerbaren Referenzoszillators 31 angeschlossen ist und ausgangsseitig über ein komplexes Tiefpaßfilter 32 mit einem digitalen Phase-Locked-Loop 33 verbunden ist. Der Loop 33 ist ausgangsseitig an ein Summationsglied 34 angeschlossen.

Das Regelsignal $c_k$ des digitalen Phase-Locked-Loops 33 wird wie der Start-Schätzwert $m_k$ für die Schrittaktfrequenz $f_{Bd}$ dem Summationsglied 34 zugeleitet, das ausgangsseitig an die Signalerzeugungseinheit 4 angeschlossen ist. Der Start-Schätzwert $m_k$ wird

außerdem dem Steuereingang des ersten Referenzoszillators 31 zugeführt.

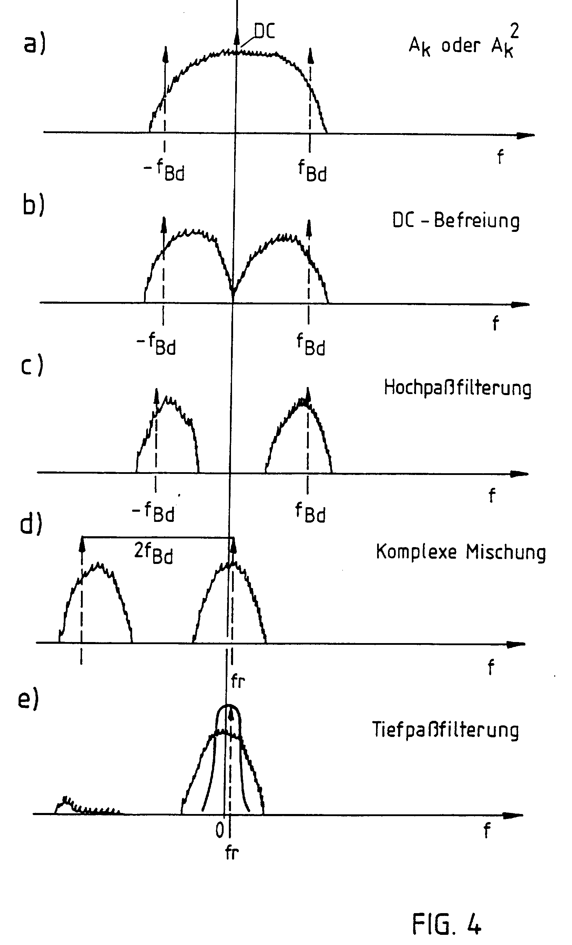

Die Nichtlinearität 1 erzeugt aus dem ersten komplexen Basisbandsignal $b_k$ mit seinem Realanteil Re und seinem Imaginäranteil Im den Betrag (Einhüllende) $A_k$ oder - alternativ hierzu - das Betragsquadrat (Energiesignal) $A_k^2$ dieses Signals (vgl. hierzu FIG. 4a).

In den Figuren 2 und 3 sind vorteilhafte Ausgestaltungen dieser Nichtlinearität 1 gezeigt.

In FIG. 2 ist als Nichtlinearität la ein Koordinatentransformator gezeigt, der beispielhaft nach dem COR-DIC-Algorithmus arbeitet und der das in karthesischer Koordinatendarstellung vorliegende digitale, vorgefilterte erste komplexe Basisbandsignal $b_k$ in eine durch Phase $\varphi_k$ und Betrag $A_k$ charakterisierte Polarkoordinatendarstellung umwandelt.

Während das Phasensignal $\varphi_k$ für die Schrittaktgeneration nicht weiter benötigt wird (es kann vorteilhaft für Anordnungen zur rekursiven Trägerrückgewinnung verwendet werden, die z.B. eine CORDIC-Loop in der Phasenebene enthalten), wird das so erzeugte Betragssignal $A_k$ zur Schrittakt-Regeneration weiter verwendet, indem es der digitalen Filtereinheit 2 zugeleitet wird.

In FIG. 3 ist als Nichtlinearität 1b eine Schaltung aus zwei Mischern 10, 11 sowie einem Summationsglied 12 gezeigt.

Der eine Mischer 10 ist mit seinen beiden Eingängen an den den Realteil Re des ersten Basisbandsignals $b_k$ führenden Ausgang des (nicht gezeigten) Vorfilters angeschlossen, während der andere Mischer 11 mit seinen beiden Eingängen an den den Imaginärteil Im des ersten Basisbandsignals $b_k$ führenden Ausgang dieses Vorfilters angeschlossen ist. Ausgangsseitig sind die beiden Mischer 10, 11 mit den Eingängen des Summationsgliedes 12 verbunden, das mit seinem Ausgang an den Eingang der digitalen Filtereinheit 2 angeschlossen ist.

In den beiden Mischern 10, 11 wird der Real- und Imaginärteil Re und Im des ersten Basisbandsignals $b_k$ quadriert und in dem Summationsglied 12 zu dem Betragsquadrat- oder Energiesignal $A_k^2$ zusammengefaßt.

Das in der Nichtlinearität erzeugte reelle Betrags- oder Hüllkurvensignal $A_k$ oder alternativ hierzu Betragsquadrat- oder Energiesignal $A_k^2$ wird danach in der digitalen Filtereinheit 2 zunächst in der Baugruppe 20 von dem Gleichanteil (= spektraler Signalanteil bei Frequenz Null) befreit (vgl. hierzu FIG. 4b), anschließend wird im Hochpaßfilter 21 das Signal-zu-Rausch-Verhältnis durch Unterdrückung weiterer spektraler Störsignalanteile weiter verbessert und dadurch die spektrale Energie im Bereich der geschätzten Schrittaktfrequenz $f_{Bd}$ maximiert (vgl. hierzu FIG. 4c). Die Filterparameter des Hochpaßfilters 21 sind dabei in ihrer Dimensionierung gewählt, daß die spektralen Signalanteile in der unmittelbaren Umgebung um die geschätzte Schrittaktfrequenz $f_{Bd}$ herum nur sehr wenig oder gar nicht gedämpft werden.

Das dadurch entstehende reelle Ausgangssignal $d_k$

der digitalen Filtereinheit 2 wird anschließend dem komplexen Trackingfilter 3 zugeführt, mit dessen Hilfe die eigentliche Schätzung des Schrittaktes erfolgt.

Hierzu wird das reelle Ausgangssignal $d_k$ der digitalen Filtereinheit 2 zunächst durch komplexe Mischung mit dem Signal $u_k$ des ersten Referenzoszillators 31, dessen Frequenz mit dem Start-Schätzwert $m_k$ für die Schrittaktfrequenz $f_{Bd}$ übereinstimmt, in eine angenäherte O-ZF-Lage verschoben mit einem Restschrittaktsignal zunächst unbekannter Frequenz $f_r$ und Phase $\zeta_r$ sowie mit einem frequenzverschobenen Spiegelfrequenz-Spektralanteil bei $f_r - 2f_{Bd} \approx -2f_{Bd}$ (vgl. hierzu FIG. 4d).

Der so erzeugte komplexe Signalzeiger $x_k'$ am Ausgang des Mischers 30 liegt dann annähernd in 0-ZF-Lage vor und dreht sich mit die Winkelgeschwindigkeit der verbleibenden Fehlabstimmung. Mit Hilfe zweier schmaler Tiefpaßfilter der komplexen Tiefpaßfiltereinheit 32 werden die störenden Spektralanteile bei $f \approx -2f_{Bd}$ unterdrückt und der Signal-Rausch-Abstand (Außenrauschen, Selfnoise) weiter verbessert (vgl. hierzu FIG. 4e). Die Synchronisation auf den so erzeugten tiefpaßgefilterten komplexen Signalzeiger $x_k$ der verbliebenen Fehlabstimmung erfolgt dann mit Hilfe des Loops 33, der ohne Pegeleinkopplung arbeitet. Der Verzicht auf die Pegeleinkopplung ist zweckmäßig, da die Amplitudeneinbrüche im Betrags- oder Energiesignal in Abhängigkeit von den jeweiligen Systemrandbedingungen unterschiedlich ausfallen können und somit die Loop-Dynamik stark beeinflußen würden. Durch Zusammenführung des Regelsignals $c_k$ des Loops 33 mit dem Start-Schätzwert $m_k$ wird der Schätzwert $n_k$ für den Schrittakt gebildet. Unter Beachtung des Phasenverlaufs $\varphi(f)$ insbesondere der Tiefpaßfiltereinheit 32 erfolgt dann anhand dieses Schätzwertes $n_k$ in der Signalerzeugungseinheit 4 die Erzeugung des Schrittaktsignals S, das anschließend z.B. einem (nicht gezeigten) Entscheider zugeleitet wird bzw. zur Triggerung der Phasen- bzw. Augendiagrammdarstellungen benutzt wird.

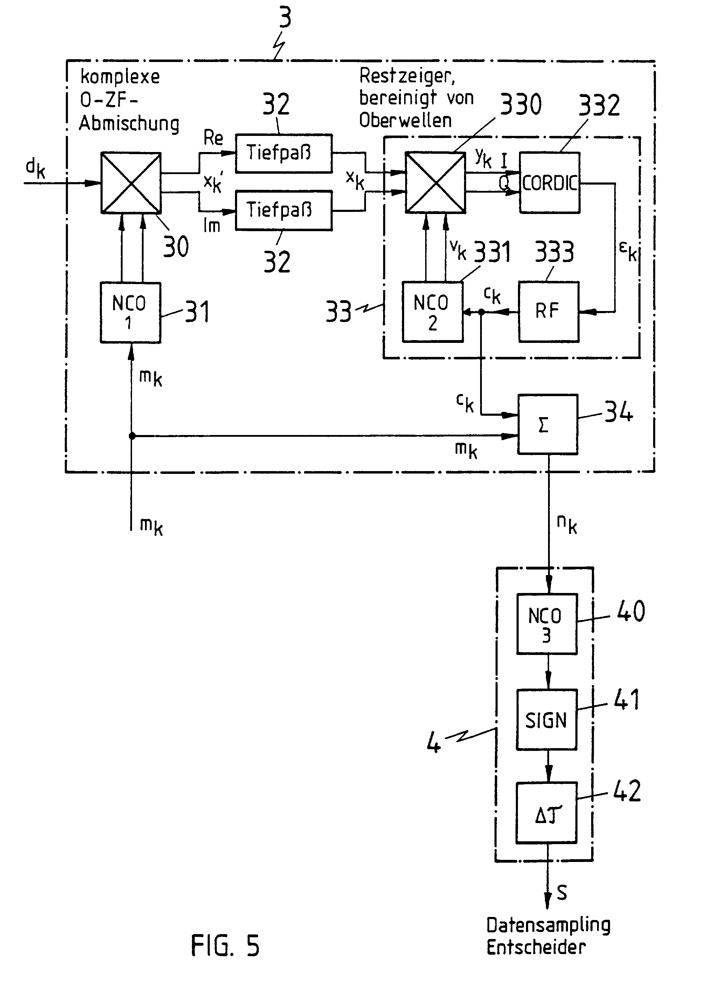

In FIG. 5 ist eine vorteilhafte Ausgestaltung des Trackingfilters 3 und der Signalerzeugungseinheit 4 der Anordnung gemäß FIG. 1 im Detail gezeigt.

Das Trackingfilter 3 enthält - unter Bezugnahme auf die entsprechende Beschreibung der FIG. 1 - die bereits beschriebenen Baugruppen: komplexer Mischer 30, erster Referenzoszillator 31, komplexe Tiefpaßfiltereinheit 32, digitaler Phase-Locked-Loop (DPLL) 33 sowie Summationsglied 34. Die Tiefpaßfiltereinheit 32 besteht aus zwei schmalbandigen Tiefpaßfiltern, wobei der eine mit dem Mischerausgang für den Realteil Re des komplexen Zeigers $x_k'$ verbunden ist und der andere Filter mit dem Mischerausgang für den Imaginärteil Im des komplexen Zeigers $x_k'$.

Der digitale Phasen-Locked-Loop 33 besteht aus einem komplexen Quadraturmischer 330, der eingangsseitig zum einen mit den beiden Tiefpaßfiltern der komplexen Tiefpaßfiltereinheit 32 verbunden ist und zum anderen mit dem Ausgang eines zweiten steuerbaren Referenzoszillator 331. Ausgangsseitig ist der Mischer 330 mit einem Koordinatentransformator 332 verbunden, der das in karthesischer Koordinatendarstellung vorliegende Ausgangssignal $y_k$ des Mischers 330 mit seinen beiden Signalanteilen I und Q in eine durch Phase und Betrag gekennzeichnete Polarkoordinatendarstellung umwandelt.

Der Koordinatentransformator 332 arbeitet vorzugsweise nach dem CORDIC-Algorithmus. Das auf dem der Phase zugeordneten Ausgang des Koordinatentransformators 332 liegende Phasenfehlersignal $\varepsilon_k$ wird anschließend einem Regelfilter 333 zugeleitet, der daraus ein Regelsignal $c_k$ für den zweiten Referenzoszillator 331 ableitet, mit dessen Steuereingang er ausgangsseitig verbunden ist.

Mit dieser rekursiv arbeitenden Regelschleife wird die Feinabstimmung vorgenommen und die Frequenz $f_r$ bzw. Phase $\zeta_r$ des Restschrittaktsignals (vgl. FIG. 4e) geschätzt.

Dieser Schätzwert $c_k$ wird zusammen mit dem Start-Schätzwert $m_k$ für die Schrittaktfrequenz $f_{Bd}$ dem Summationsglied 34 zugeführt, in dem aus diesen beiden Werten $c_k$ die Schätzwerte $n_k$ für die Schrittaktfrequenz $f_{Bd}$ bzw. -phase $\tau$ gebildet werden, die sich mit fortschreitendem rekursiven Regelprozeß in dem Loop 33 immer mehr den tatsächlichen Werten für die Schrittaktfrequenz $f_{Bd}$ bzw. phase $\tau$ annähern.

Das Summationsglied 34 ist ausgangsseitig mit dem Steuereingang eines dritten Oszillators 40 der Signalerzeugungseinheit 4 verbunden, in dem ein entsprechendes Schrittaktsignal S erzeugt wird, dessen Vorzeichen in einer nachgeschalteten Baugruppe 41 zum Datensampling benutzt wird. In einem dieser Baugruppe 41 nachgeschalteten Phasendreher 42 wird dann noch die Phasenverschiebung $\Delta\tau$ kompensiert, die sich durch die Baugruppen der Anordnung insgesamt ergeben hat. Einen wesentlichen Beitrag zu dieser (unerwünschten und daher zu kompensierenden) apparativ bedingten Phasenverschiebung liefern insbesondere die beiden Tiefpaßfilter 32 des Trackingfilters 3.

Es versteht sich, daß die Erfindung nicht auf die beschriebenen Ausführungsbeispiele beschränkt ist, sondern vielmehr auf weitere übertragbar ist.

So ist es z.B. möglich, die beschriebene Anordnung zur Schrittakt-Regeneration nicht nur, wie beschrieben, parallel zur Trägerückgewinnung zu beschreiben, sondern auch seriell unter Nutzung der aus der Trägerückgewinnung gewonnenen Informationen.

Ferner können außer dem CORDIC-Algorithmus auch andere Algorithmen zur Koordinatentransformation der karthesischen Koordinatendarstellung in die Polarkoordinatendarstellung verwendet werden.

Schließlich ist es möglich, das erste komplexe Basisbandsignal ($b_k$ in FIG. 1) vor dessen Vorfilterung einer Unterabtastung zu unterziehen mit vorzugsweise etwa 8-10 Abtastwerten/Symbol.

Auch kann das im rekursiven Regelprozeß des digitalen Phase-Locked-Loops (33 in FIG. 1) gewonnene Regelsignal $c_k$ in einem weiteren Regelkreis zur Regelung der Frequenz und Phase des ersten Referenzoszillators (31 in FIG. 1) verwendet werden.

Schließlich ist es möglich, das Datensampling in den nachgeschalteten Einheiten wie z.B. dem Entscheider dadurch zu vereinfachen, daß z.B. in dem Ausführungsbeispiel des Trackingfilters und der Signalerzeugungseinheit in FIG. 5 zum einen zwischen diese beiden Baugruppen ein Multiplizierer mit dem Faktor 1/2 geschaltet wird und zum anderen in der Signalerzeugungseinheit 4 der Vorzeicheneinheit 41 ein Differenzierer und ein Quadrierer nachgeschaltet wird. Der Multiplizierer halbiert die aus dem Trackingfilter 3 kommenden Schätzwerte $n_k$, so daß der Oszillator 40 der Signalerzeugungseinheit 4 ein Signal mit der Frequenz $n_k/2$ abgibt. In der Vorzeicheneinheit 41 wird aus dem sinusförmigen Ausgangssignal des Oszillators 40 ein Rechtecksignal der gleichen Frequenz gemacht, das dem Differenzierer zugeleitet wird, der das Rechtecksignal differenziert. Das differenzierte Signal weist den Flanken des Rechtecksignals entsprechende positive und negative Signalspitzen auf und ist sonst Null. Im Quadrierer werden diese Signalspitzen quadriert mit der Folge, daß die negativen Signalspitzen "umgeklappt" werden. Am Ausgang des Quadriers erscheint somit ein Signal mit der doppelten Frequenz von $n_k/2$ (also $n_k$). Wäre bei der hier beschriebenen Ausführungsform kein Multiplizierer vorgesehen, würde am Ausgang des Quadrierers ein Signal mit der Frequenz $2n_k$ erscheinen mit der Folge, daß das Datensampling dann bei der doppelten Schrittaktfrequenz durchgeführt werden müßte.

## Patentansprüche

1. Verfahren zur Schrittakt-Regeneration bei der Demodulation von digital modulierten Trägersignalen, gekennzeichnet durch folgende Merkmale:

   - das mit einem digitalen Modulationssignal von zunächst unbekannter Schrittaktfrequenz $f_{Bd}$ und -phase $\tau$ modulierte Trägersignal wird in ein digitales, vorgefiltertes erstes komplexes Basisbandsignal ($b_k$) umgesetzt;

   - mit Hilfe einer Nichtlinearität (1; 1a; 1b) wird der Betrag ($A_k$) oder das Betragsquadrat ($A_k^2$) des ersten komplexen Basisbandsignals ($b_k$) gebildet;

   - mit Hilfe einer digitalen Filtereinheit (2) werden die spektralen Signalanteile des Betrags- oder Betragsquadratsignals ($A_k$ bzw. $A_k^2$) außerhalb eines vorgegebenen Frequenzbereichs um die geschätzte Schrittaktfrequenz $f_{Bd}$ herum, insbesondere der spektrale Signalanteil bei der Frequenz Null, unterdrückt oder zumindest weitgehend unterdrückt;

   - mit Hilfe eines komplexen Trackingfilters (3) werden (wird) in einem teilweise oder vollständig rekursiv ablaufenden Regelprozeß anhand des reellen Ausgangssignals ($d_k$) der digitalen Filtereinheit (2) die Schrittaktfrequenz $f_{Bd}$ und/oder -phase $\tau$ geschätzt und dabei die jeweiligen Schätzwerte ($n_k$) für Schrittaktfrequenz und/oder -phase $f_{Bd}$, $\tau$ sukzessive mit den tatsächlichen Werten für Schrittaktfrequenz und/oder -phase $f_{Bd}$, $\tau$ in Übereinstimmung gebracht oder zumindest annähernd in Übereinstimmung gebracht;

   - anhand der Schätzwerte ($n_k$) für Schrittaktfrequenz und/oder -phase $f_{Bd}$, $\tau$ wird in einer Signalerzeugungseinheit (4) ein entsprechendes Schrittaktsignal (S) erzeugt.

2. Verfahren nach Anspruch 1, dadurch gekennzeichnet,

   - daß ein hinreichend genauer Start-Schätzwert ($m_k$) der Schritttaktfrequenz $f_{Bd}$ und -phase $\tau$ vorgegeben wird;

   - daß im komplexen Trackingfilter (3):

     - ein erstes Referenzsignal ($u_k$) mit einer diesem Start-Schätzwert ($m_k$) entsprechenden Frequenz erzeugt wird;
     - das reelle Ausgangssignal ($d_k$) der digitalen Filtereinheit (2) mit diesem ersten Referenzsignal ($u_k$) komplex gemischt wird und dadurch in eine angenäherte O-ZF-Lage verschoben wird mit einem Restschrittaktsignal zunächst unbekannter Frequenz $f_r$ und Phase $\zeta_r$ sowie mit frequenzverschobenen Spektralanteilen bei $f_r$- $2f_{Bd} \approx -2f_{Bd}$;
     - mit Hilfe einer Tiefpaßfiltereinheit (32) zum einen die frequenzverschobenen Spektralanteile bei $\approx -2f_{Bd}$ unterdrückt werden und zum anderen das Signal-Rausch-Verhältnis im 0-ZF-Lage-Signal selbst verbessert wird;
     - aus dem so erzeugten zweiten komplexen Basisbandsignal ($x_k$) mit Hilfe eines digitalen Phase-Looked-Loops (33) in einem rekursiven Regelprozeß Frequenz $f_r$ und/oder Phase $\zeta_r$ des Restschrittaktsignals geschätzt werden (wird) und dabei die jeweiligen Schätzwerte ($c_k$) für Frequenz $f_r$ und/oder Phase $\zeta_r$ des Restschrittaktsignals sukzessive mit den tatsächlichen Werten für Frequenz $f_r$ und/oder Phase $\zeta_r$ des Restschrittaktsignals in Übereinstimmung oder zumindest annähernd in Übereinstimmung gebracht werden (wird) ;

- daß die mit Hilfe des digitalen Phase-Locked-Loops (33) gewonnenen Schätzwerte ($c_k$) für die Frequenz $f_r$ und/oder Phase $\zeta_r$ des Rest-Schrittaktsignals mit dem Start-Schätzwert ($m_k$) der Schrittaktfrequenz $f_{Bd}$ und -phase $\tau$ zusammengeführt werden und aus diesen Schätzwerten ($c_k$, $m_k$) die Schätzwerte ($n_k$) für die Schrittaktfrequenz $f_{Bd}$ und/oder - phase $\tau$ gebildet werden (wird).

3. Verfahren nach Anspruch 2, dadurch gekennzeichnet,

- daß in dem digitalen Phase-Locked-Loop (33) das zweite komplexe Basisbandsignal ($x_k$) mit einem zweiten Referenzsignal ($v_k$) der Frequenz $f_v$ und der Phase $\zeta_v$ komplex quadraturgemischt wird;

- daß in einem rekursiven Regelprozeß zunächst die durch die komplexe Quadraturmischung erzeugten In-Phase- und Quadratur-Signale (I, Q) von der karthesischen Koordinatendarstellung in eine durch Betrag und Phase dieser Signale (I, Q) charakterisierte Polarkoordinatendarstellung transformiert werden, daß anschließend aus dem so erzeugten Phasenfehlersignal ($\varepsilon_k$) ein Regelsignal ($c_k$) abgeleitet wird, mit dem Frequenz $f_v$ und Phase $\zeta_v$ des zweiten Referenzsignals ($v_k$) sukzessive mit der Frequenz $f_r$ und Phase $\zeta_r$ des Restschritt-akt-Signals in Übereinstimmung oder zumindest annähernd in Übereinstimmung gebracht wird.

4. Verfahren nach Anspruch 3, dadurch gekennzeichnet, daß die Koordinatentransformation der In-Phase- und Quadratur-Signale (I, Q) von der karthesischen Koordinatendarstellung in die Polarkoordinatendarstellung mit Hilfe des CORDIC-Algorithmus durchgeführt wird.

5. Verfahren nach einem der Ansprüche 2 bis 4, dadurch gekennzeichnet, daß die mit Hilfe des digitalen Phase-Locked-Loops (33) gewonnenen Schätzwerte ($c_k$) für die Frequenz $f_r$ und die Phase $\zeta_r$ des Restschrittaktsignals zu dem Start-Schätzwert ($m_k$) der Schrittaktfrequenz $f_{Bd}$ und/oder -phase $\zeta_{Bd}$ hinzuaddiert werden und aus dem so erzeugten Summensignal das Schrittaktsignal (S) gebildet wird.

6. Verfahren nach Anspruch 5, dadurch gekennzeichnet, daß eine Phasenverschiebung des Schrittaktsignals (S) gegenüber dem demodulierten Trägersignal kompensiert wird.

7. Verfahren nach einem der Ansprüche 1 bis 6, dadurch gekennzeichnet, daß der Betrag ($A_k$) des ersten komplexen Basisbandsignals ($b_k$) mit Hilfe einer Koordinatentransformation des ersten komplexen Basisbandsignals ($b_k$) von der karthesischen Koordinatendarstellung in eine durch Betrag ($A_k$) und Phase ($\zeta_k$) dieses Signals charakterisierte Polarkoordinatendarstellung gewonnen wird.

8. Verfahren nach Anspruch 7, dadurch gekennzeichnet, daß die Koordinatentransformation des ersten komplexen Basisbandsignals ($b_k$) von der karthesischen Koordinatendarstellung in die Polarkoordinatendarstellung mit Hilfe des CORDIC-Algorithmus durchgeführt wird.

9. Verfahren nach einem der Ansprüche 1 bis 6, dadurch gekennzeichnet, daß das Betragsquadrat ($A_k^2$) des ersten komplexen Basisbandsignals ($b_k$) durch separate Quadrierung des Realteils (Re) und des Imaginärteils (Im) des ersten Basisbandsignals ($b_k$) mit anschließender Summation dieser quadrierten Signalanteile (Re, Im) gebildet wird.

10. Verfahren nach einem der vorhergehenden Ansprüche, dadurch gekennzeichnet, daß in der digitalen Filtereinheit (2) das Betrags- oder Betragsquadrat-signal ($A_k$ bzw. $A_k^2$) zunächst von seinem Spektralanteil bei Frequenz Null befreit oder zumindest annähernd befreit wird und anschließend einer Hochpaß- oder Bandpaßfilterung unterzogen wird und daß die Filterparameter des verwendeten Hoch- oder Bandpasses (21) so gewählt sind, daß die spektralen Signalanteile in der unmittelbaren Umgebung um die geschätzte Schrittaktfrequenz $f_{Bd}$ herum nur wenig oder gar nicht gedämpft werden.

11. Anordnung zur Schrittakt-Regeneration bei der Demodulation von digital modulierten Trägersignalen zum Durchführen des Verfahrens nach einem der vorhergehenden Ansprüche, dadurch gekennzeichnet,

- daß eine Einheit zur Umsetzung des mit einem digitalen Modulationssignal modulierten Trägersignals in ein erstes digitales, vorgefiltertes, komplexes Basisbandsignal ($b_k$) vorgesehen ist und daß diese Einheit ein komplexes Vorfilter aufweist;

- daß eine Nichtlinearität (1; 1a; 1b) zur Bildung des Betrags ($A_k$) oder des Betragsquadrats ($A_k$^2) des ersten komplexen Basisbandsignals ($b_k$) vorgesehen ist;

- daß diese Nichtlinearität (1; 1a; 1b) eingangsseitig an das komplexe Vorfilter für das erste komplexe Basisbandsignal ($b_k$) und ausgangs-

seitig an eine digitale Filtereinheit (2) zur Hoch- oder Bandpaßfilterung des Betrags- oder Betragsquadratsignals ($A_k$ bzw. $A_{K\_}^2$) angeschlossen ist;

- daß die digitale Filtereinheit (2) ausgangsseitig mit einem komplexen Trackingfilter (3) zur Schätzung der Schrittaktfrequenz $f_{Bd}$ und/oder -phase $\tau$ verbunden ist;

- daß das komplexe Trackingfilter (3) ausgangsseitig mit einer Signalerzeugungseinheit (4) zur Erzeugung des Schrittaktsignals (S) verbunden ist.

12. Anordnung nach Anspruch 11, dadurch gekennzeichnet,

- daß das Trackingfilter einen komplexen Mischer (30), einen ersten steuerbaren Referenzoszillator (31), eine komplexe Tiefpaßfiltereinheit (32), einen digitalen Phase-Locked-Loop (33) sowie ein Summationsglied (34) enthält;

- daß der komplexe Mischer (30) eingangsseitig zum einen mit dem Ausgang der digitalen Filtereinheit (2) und zum anderen mit dem Ausgang des ersten Referenzoszillators (31) verbunden ist und ausgangsseitig an die komplexe Tiefpaßfiltereinheit (32) angeschlossen ist;

- daß der digitale Phase-Locked-Loop (33) eingangsseitig mit der komplexen Tiefpaßfiltereinheit (32) und ausgangsseitig mit dem Summationsglied (34) verbunden ist;

- daß der Start-Schätzwert ($m_k$) der Schrittaktfrequenz $f_{Bd}$ und -phase $\tau$ zum einen auf den Steuereingang des ersten Referenzoszillators (31) gegeben ist und zum anderen dem Summationsglied (34) zugeführt ist;

- daß das Summationsglied (34) ausgangsseitig mit der Signalerzeugungseinheit (4) verbunden ist.

13. Anordnung nach Anspruch 12, dadurch gekennzeichnet,

- daß der digitale Phase-Locked-Loop (33) einen komplexen Quadraturmischer (330), einen zweiten Referenzoszillator (331), einen Koordinatentransformator (332) zur Transformation von der karthesischen Koordinatendarstellung in eine durch Betrag und Phase charakterisierte Polarkoordinatendarstellung sowie einen Regelfilter (333) enthält;

- daß der komplexe Quadraturmischer (330) eingangsseitig zum einen mit dem Ausgang der komplexen Tiefpaßfiltereinheit (32) und zum anderen mit dem Ausgang des zweiten Referenzoszillators (331) verbunden ist und ausgangsseitig an den Koordinatentransformator (332) angeschlossen ist;

- daß das Regelfilter (333) eingangsseitig an den das Phasensignal führenden Ausgang des Koordinatentransformators (332) angeschlossen ist und ausgangsseitig zum einen mit dem Steuereingang des zweiten Referenzoszillators (331) und zum anderen mit dem Summationsglied (34) verbunden ist.

14. Anordnung nach Anspruch 13, dadurch gekennzeichnet, daß der Koordinatentransformator (332) nach dem CORDIC-Algorithmus arbeitet.

15. Anordnung nach einem der Ansprüche 13 oder 14, dadurch gekennzeichnet,

- daß die Signalerzeugungseinheit (4) einen dritten steuerbaren Oszillator (40) enthält;

- daß das Summationsglied (34) des Trackingfilters (3) ausgangsseitig mit dem Steuereingang des dritten Oszillators (40) verbunden ist.

16. Anordnung nach Anspruch 15, dadurch gekennzeichnet, daß dem dritten Oszillator (40) ausgangsseitig eine Vorzeicheneinheit (41) und/oder ein Phasenschieber (42) nachgeschaltet ist.

17. Anordnung nach einem der Ansprüche 11 bis 15, dadurch gekennzeichnet, daß die Nichtlinearität (la) einen weiterer Koordinatentransformator enthält, der die ersten Basisbandsignale ($b_k$) von der karthesischen Koordinatendarstellung in eine durch Betrag $A_k$ und Phase $\varphi_k$ charakterisierte Polarkoordinatendarstellung transformiert.

18. Anordnung nach Anspruch 17, dadurch gekennzeichnet, daß der weitere Koordinatentransformator (la) nach dem CORDIC-Algorithmus arbeitet.

19. Anordnung nach einem der Ansprüche 11 bis 15, dadurch gekennzeichnet,

- daß die Nichtlinearität (1b) aus zwei Mischern (10, 11) und einem weiteren Summationsglied (12) besteht;

- daß das weitere Summationsglied (12) eingangsseitig an die Ausgänge der beiden Mischer (10, 11) angeschlossen ist;

- daß der eine (10) der beiden Mischer (10, 11) mit seinen beiden Eingängen an den den Realteil (Re) des komplexen ersten Basisbandsignals ($b_k$) führenden Ausgang des komplexen Vorfilters angeschlossen ist und der andere (11) der beiden Mischer (10, 11) mit seinen beiden Eingängen an den den Imaginärteil (Im) des komplexen ersten Basisbandsignals ($b_k$) führenden Ausgang des komplexen Vorfilters angeschlossen ist.

20. Anordnung nach einem der Ansprüche 11 bis 19, dadurch gekennzeichnet, daß die digitale Filtereinheit (2) aus einer Einheit (20) zur Unterdrückung der spektralen Signalanteile bei der Frequenz Null sowie einem nachgeschalteten Hoch- oder Bandpaßfilter (21) besteht.

21. Demodulator insbesondere für den Kurzwellenbereich, mit einer Anordnung nach einem der Ansprüche 11 bis 20.

22. Empfänger insbesondere für den Kurzwellenbereich, mit einem Demodulator nach Anspruch 21 oder mit einer Anordnung nach einem der Ansprüche 11 bis 20.

**Claims**

1. Method for the clock pulse regeneration during the demodulation of digitally modulated carrier signals, characterised by the following features:

   - the carrier signal modulated by a digital modulation signal of initially unknown clock pulse frequency $f_{Bd}$ and phase $\tau$ is translated into a digital, preliminarily filtered first complex base band signal ($b_k$),

   - the magnitude ($A_k$) or the square of the magnitude ($A_k^2$) of the first complex base-band signal ($b_k$) is formed with the aid of a non-linearity (1; 1a; 1b),

   - the spectral signal components of the magnitude signal ($A_k$) or the squared magnitude signal ($A_k^2$) outside a preset frequency range around the estimated clock pulse frequency $f_{Bd}$, in particular the spectral signal component at zero frequency, is suppressed or at least largely suppressed with the aid of a digital filter unit (2),

   - the clock pulse frequency $f_{Bd}$ and/or phase $\tau$ is or are estimated by reference to the real output signal ($d_k$) of the digital filter unit (2) with the aid of a complex tracking filter (3) in a partially or completely recursive running regulating process and the respective estimated value ($n_k$) for clock pulse frequency $f_{Bd}$ and/or phase $\tau$ is or are in that case brought successively into agreement or into at least approximate agreement with the actual values for clock pulse frequency $f_{Bd}$ and/or phase $\tau$ and

   - a corresponding clock pulse signal (S) is produced in a signal-generating unit (4) by reference to the estimated values ($n_k$) for clock pulse frequency $f_{Bd}$ and/or phase $\tau$.

2. Method according to claim 1, characterised thereby,

   - that a sufficiently accurate starting estimated value ($m_k$) of the clock pulse frequency $f_{Bd}$ and/ or phase $\tau$ is preset,

   - that in the complex tracking filter (3)

     - there is produced a first reference signal ($u_k$) at a frequency corresponding to this starting estimated value ($m_k$),

     - the real output signal ($d_k$) of the digital filter unit (2) is mixed in complex manner with this first reference signal ($u_k$) and thereby shifted into an approximate 0-ZF position with a remainder clock pulse signal of initially unknown frequency $f_r$ and phase $\xi_r$ as well as with frequency-shifted spectral components at $f_f - 2f_{Bd} \approx -2f_{Bd}$,

     - the frequency-shifted spectral components at approximately $-2f_{Bd}$ are suppressed on the one hand and the signal-to-noise ratio in the 0-ZF position signal itself is improved on the other hand with the aid of a low-pass filter unit (32) and

     - frequency $f_r$ and/or phase $\xi_r$ of the remainder clock pulse signal is or are estimated from the thus produced second complex base-band signal ($x_k$) with the aid of a digital phase-locked loop (33) in a recursive regulating process and the respective estimated values ($c_k$) for frequency $f_r$ and/or phase $\xi_r$ of the remainder clock pulse signal is or are in that case brought successively into agreement or into at least approximate agreement with the actual values for frequency $f_r$ and/or phase $\xi_r$ of the remainder clock pulse signal

   - that the respective estimated values ($c_k$) for the frequency $f_r$ and/or phase $\xi_r$ of the remainder clock pulse signal, which were obtained with the aid of the digital phase-locked loop (33), are brought together with the starting estimated value ($m_k$) of the clock pulse frequency $f_{Bd}$ and/or phase $\tau$ and the estimated values ($n_k$) for the clock pulse frequency $f_{Bd}$ and/or phase $\tau$ are formed from these estimated values ($c_k$, $m_k$).

3. Method according to claim 2, characterised thereby,

   - that the second complex base-band signal ($x_k$) is mixed in quadrature in complex manner with a second reference signal ($v_k$) of the frequency $f_v$ and the phase $\xi_v$ in the digital phase-locked loop (33) and

   - that the in-phase signals (I) and the quadrature signals (Q) produced by the complex quadrature mixing are initially transformed in a recursive regulating process from the Cartesian co-ordinate representation into a polar co-ordinate representation characterised by magnitude (I) and phase (Q) of these signals and that subsequently, from the thus produced phase error signal ($\varepsilon_k$), there is derived a regulating signal ($c_k$), by which frequency $f_v$ and phase $\xi_v$ of the second reference signal ($v_k$) are brought successively into agreement or at least approximate agreement with the frequency $f_r$ and the phase $\xi_r$ of the remainder clock pulse signal.

4. Method according to claim 3, characterised thereby, that the co-ordinate transformation of the in-phase signals (I) and the quadrature signals (Q) from the Cartesian co-ordinate representation into the polar co-ordinate representation is performed with the aid of the COR-DIC algorithm.

5. Method according to one of the claims 2 to 4, characterised thereby, that the estimated values ($c_k$) for frequency $f_r$ and the phase $\xi_r$ of the remainder clock pulse signal, which values were obtained with the aid of the digital phase-locked loop (33), are added to the starting estimated value ($m_k$) of the clock pulse frequency $f_{Bd}$ and/or phase $\tau$ and the clock pulse signal (S) is formed from the sum signal thus produced.

6. Method according to claim 5, characterised thereby, that a phase shift of the clock pulse signal (S) relative to the demodulated carrier signal is compensated for.

7. Method according to one of the claims 1 to 6, characterised thereby, that the magnitude ($A_k$) of the first complex base-band signal ($b_k$) is obtained with the aid of a co-ordinate transformation of the first complex base-band signal ($b_k$) from the Cartesian co-ordinate representation into a polar co-ordinate representation characterised by magnitude ($A_k$) and phase ($\xi_k$) of this signal.

8. Method according to claim 7, characterised thereby, that the co-ordinate transformation of the first complex base-band signal ($b_k$) from the Cartesian co-ordinate representation into the polar co-ordinate representation is performed with the aid of the COR-DIC algorithm.

9. Method according to one of the claims 1 to 6, characterised thereby, that the squared-magnitude ($A_k^2$) of the first complex base-band signal ($b_k$) is formed by separate squaring of the real part (Re) and of the imaginary part (Im) of the first base-band signal ($b_k$) with subsequent summation of these squared signal components (Re, Im).

10. Method according to one of the preceding claims, characterised thereby, that the magnitude signal ($A_k$) or the squared magnitude signal ($A_k^2$) is initially freed or at least nearly freed of its spectral component at zero frequency in the digital filter unit (2) and subsequently subjected to a high-pass filtering or band-pass filtering and that the filter parameters of the high-pass or band-pass filter (21) used are so chosen that the spectral signal components in the immediate proximity around the estimated clock pulse frequency $f_{Bd}$ are attenuated only slightly or not at all.

11. Arrangement for the clock pulse regeneration during the demodulation of digitally modulated carrier signals for the performance of the method according to one of the preceding claims, characterised thereby,

    - that a unit is provided for the translation of the carrier signal modulated by a digital modulation signal into a first digital, preliminarily filtered base-band signal ($b_k$) and that this unit comprises a complex preliminary filter,

    - that a non-linearity (1; 1a; 1b) is provided for the formation of the magnitude ($A_k$) or the squared magnitude ($A_k^2$) of the first complex base-band signal ($b_k$),

    - that this non-linearity (1; 1a; 1b) is connected at the input to the complex preliminary filter for the first complex base-band signal ($b_k$) and at the output to a digital filter unit (2) for the high-pass filtering or band-pass filtering of the magnitude signal ($A_k$) or the squared magnitude signal ($A_k^2$),

    - that the digital filter unit (2) is connected at the output with a complex tracking filter (3) for the estimation of the clock pulse frequency $f_{Bd}$ and/

or phase $\tau$ and

- that the complex tracking filter (3) is connected at the output with a signal-generating unit (4) for the production of the clock pulse signal (S).

12. Arrangement according to claim 11, characterised thereby, that

- that the tracking filter contains a complex mixer (30), a first controllable reference oscillator (31), a complex low-pass filter unit (32), a digital phase-locked loop (33) as well as a summation member (34),

- that the complex mixer (30) is connected at the input on the one hand with the output of the digital filter unit (2) and on the other hand with output of the first reference oscillator (31) and at the output to the complex low-pass filter unit (32),

- that the digital phase-locked loop (33) is connected at the input with the complex low-pass filter unit (32) and at the output with the summation member (34),

- that the starting estimated value ($m_k$) of the clock pulse frequency $f_{Bd}$ and phase $\tau$ is on the one hand applied to the control input of the first reference oscillator (31) and on the other hand led to the summation member (34) and

- that the summation member (34) is connected at the output side with the signal-generating unit (4).

13. Arrangement according to claim 12, characterised thereby, that

- the digital phase-locked loop (33) contains a complex quadrature mixer (330), a second reference oscillator (331), a co-ordinate transformer (332) for the transformation from the Cartesian co-ordinate representation into a polar co-ordinate representation, which is characterised by magnitude and phase, as well as a regulating filter (333),

- that the complex quadrature mixer (330) is connected at the input on the one hand with the output of the complex low-pass filter unit (32) and on the other hand with the output of the second reference oscillator (331) and at the output to the co-ordinate transformer (332) and

- that the regulating filter (333) is connected at the input to that output of the co-ordinate transformer (332), which carries the phase signal, and at the output on the one hand with the control input of the second reference oscillator (331) and on the other hand with the summation member (34).

14. Arrangement according to claim 13, characterised thereby, that the co-ordinate transformer (332) operates according to the CORDIC algorithm.

15. Arrangement according to one of the claims 13 and 14, characterised thereby,

- that the signal-generating unit (4) contains a third controllable oscillator (40) and

- that the summation member (34) of the tracking filter (3) is connected at the output with the control input of the third oscillator (40).

16. Arrangement according to claim 15, characterised thereby, that a sign unit (41) and/or phase shifter (42) are connected behind the output of the third oscillator (40).

17. Arrangement according to one of the claims 11 to 15, characterised thereby, that the non-linearity (1a) contains a further co-ordinate transformer which transforms the first base-band signals ($b_k$) from the Cartesian co-ordinate representation into a polar co-ordinate representation characterised by magnitude $A_k$ and phase $\varphi_k$.

18. Arrangement according to claim 17, characterised thereby, that the further co-ordinate transformer (1a) operates according to the CORDIC algorithm.

19. Arrangement according to one of the claims 11 to 15, characterised thereby,

- that the non-linearity (1b) consists of two mixers (10, 11) and a further summation member (12)

- that the further summation member (12) is connected at the input to the outputs of the two mixers (10, 11) and

- that the one (10) of the two mixers (10, 11) is connected by both its inputs to that output of the complex preliminary filter, which carries the real part (Re) of the complex first base-band signal ($b_k$), and the other one (11) of the two mixers (10, 11) is connected by both its inputs to that output of the complex preliminary filter, which carries the imaginary part (Im) of the complex first base-band signal ($b_k$).

**20.** Arrangement according to one of the claims 11 to 19, characterised thereby, that the digital filter unit (2) consists of a unit (20) for the suppression of the spectral signal components at zero frequency as well as of a high-pass or band-pass filter (21) connected therebehind.

**21.** Demodulator, in particular for the short-wave band, with an arrangement according to one of claims 11 to 20.

**22.** Receiver, in particular for the short-wave band, with a demodulator according to claims 21 or with an arrangement according to one of claims 11 to 20.


**Revendications**

**1.** Procédé de régénération d'horloge de rythme dans le cas de la démodulation de signaux porteurs modulés numériquement, caractérisé par les caractéristiques suivantes :

- le signal porteur modulé par un signal de modulation numérique de fréquence d'horloge de rythme $f_{Bd}$ et de phase $\tau$ tout d'abord inconnues, est converti en un premier signal en bande de base complexe préfiltré, numérique ($b_k$) ;
- à l'aide d'une non-linéarité (1 ; 1a ; 1b), l'amplitude ($A_k$) ou le carré de l'amplitude ($A_k^2$) du premier signal en bande de base complexe ($b_k$) est formée ;
- à l'aide d'une unité de filtre numérique (2), les composantes spectrales de signal du signal d'amplitude ou du carré d'amplitude ($A_k$ ou $A_k^2$) à l'extérieur d'une plage de fréquence prédéterminée autour de la fréquence d'horloge de rythme estimée $f_{Bd}$, en particulier la composante spectrale de signal à la fréquence zéro, sont supprimées ou au moins sensiblement supprimées ;
- à l'aide d'un filtre poursuite complexe (3), au cours d'un processus de régulation se déroulant partiellement ou entièrement de façon récurrente, à l'aide du signal de sortie réel ($d_k$) de l'unité de filtre numérique (2), la fréquence d'horloge de rythme $f_{Bd}$ et/ou la phase $\tau$ sont estimées et les valeurs estimées respectives ($n_k$) pour la fréquence d'horloge de rythme $f_{Bd}$ et/ou la phase $\tau$ sont amenées successivement en coïncidence ou au moins approximativement en coïncidence avec les valeurs effectives pour la fréquence $f_{Bd}$ et/ou la phase $\tau$ de l'horloge de rythme ;
- à l'aide des valeurs estimées ($n_k$) pour la fréquence $f_{Bd}$ et/ou la phase $\tau$ de l'horloge de rythme est généré, dans une unité de génération de signal (4), un signal d'horloge de rythme correspondant (S).

**2.** Procédé selon la revendication 1, caractérisé,

- en ce qu'une valeur estimée initiale suffisamment précise ($m_k$) de la fréquence $f_{Bd}$ et de la phase $\tau$ de l'horloge de rythme est prédéterminée ;
- en ce que, dans le filtre de poursuite complexe (3) :

    - un premier signal de référence ($u_k$) est généré avec une fréquence correspondant à cette valeur estimée initiale ($m_k$) ;
    - le signal de sortie réel ($d_k$) de l'unité de filtre numérique (2) est mélangé de façon complexe avec ce premier signal de référence ($u_k$) et ainsi est décalé dans une position approximative 0-FI avec un signal d'horloge de rythme résiduel tout d'abord de fréquence $f_r$ et de phase $\zeta_r$ inconnues, ainsi qu'avec des composantes spectrales décalées en fréquence pour $f_r$-$2f_{Bd} \approx$ -$2f_{Bd}$ ;
    - à l'aide d'une unité de filtre passe-bas (32), d'une part, les composantes spectrales décalées en fréquence pour $\approx$ -$2f_{Bd}$ sont supprimées, et d'autre part, le rapport signal/bruit dans le signal en position O-FI est lui-même amélioré ;
    - à partir du second signal en bande de base complexe ($X_k$) ainsi généré, à l'aide d'une boucle à verrouillage de phase numérique (33) au cours d'un processus de régulation récurrent, la fréquence $f_r$ et/ou la phase $\zeta_r$ du signal d'horloge de rythme résiduel sont (est) estimées et les valeurs estimées respectives ($c_k$) pour la fréquence $f_r$ et/ou la phase $\zeta_r$ du signal d'horloge de rythme résiduel sont (est) amenées en correspondance ou au moins approximativement en correspondance avec les valeurs réelles pour la fréquence $f_r$ et/ou la phase $\zeta_r$ du signal d'horloge de rythme résiduel ;

- en ce que les valeurs estimées ($c_k$) obtenues à l'aide de la boucle à verrouillage de phase numérique (33) pour la fréquence $f_r$ et/ou la phase $\zeta_r$ du signal d'horloge de rythme résiduel sont combinées avec la valeur estimée initiale ($m_k$) de la fréquence $f_{Bd}$ et de la phase $\tau$ de l'horloge de rythme et à partir de ces valeurs estimées ($c_k$, $m_k$), les valeurs estimées ($n_k$) pour la fréquence $f_{Bd}$ et/ou la phase $\tau$ de l'horloge de rythme sont (est) formées.

**3.** Procédé selon la revendication 2, caractérisé,

- en ce que dans la boucle à verrouillage de phase numérique (33), le second signal en bande de base complexe ($x_k$) est mélangé en quadrature de façon complexe avec un second signal de référence ($v_k$) à la fréquence $f_v$ et à la phase $\zeta_v$ ;

- en ce qu'au cours d'un processus de régulation récurrent, tout d'abord les signaux en phase et en quadrature (I, Q) générés par le mélange en quadrature complexe, sont transformés depuis la représentation en coordonnées cartésiennes en une représentation de coordonnées polaires caractérisée par l'amplitude et la phase de ces signaux (I, Q), en ce qu'ensuite, à partir du signal d'erreur de phase ($\varepsilon_k$) ainsi généré, un signal de régulation ($c_k$) est prélevé, amené en correspondance ou au moins approximativement en correspondance avec la fréquence $f_v$ et la phase $\zeta_v$, du second signal de référence ($v_k$) successivement avec la fréquence $f_r$ et la phase $\zeta_r$ du signal d'horloge de rythme résiduel.

4. Procédé selon la revendication 3, caractérisé en ce que la transformation de coordonnées des signaux en phase et en quadrature (I, Q) de la représentation en coordonnées cartésiennes de la représentation en coordonnées polaires est effectuée à l'aide de l'algorithme CORDIC.

5. Procédé selon l'une quelconque des revendications 2 à 4, caractérisé en ce que les valeurs estimées ($c_k$) obtenues à l'aide de la boucle à verrouillage de phase numérique (33) pour la fréquence $f_r$ et la phase $\zeta_r$ du signal d'horloge de rythme résiduel sont additionnées à la valeur estimée initiale ($m_k$) ; de la fréquence $f_{Bd}$ et/ou de la phase $\zeta_{Bd}$ de la fréquence d'horloge de rythme et à partir du signal somme ainsi obtenu est formé le signal d'horloge de rythme (S).

6. Procédé selon la revendication 5, caractérisé en ce qu'un déphasage du signal d'horloge de rythme (S) est compensé vis-à-vis du signal porteur démodulé.

7. Procédé selon l'une quelconque des revendications 1 à 6, caractérisé en ce que l'amplitude ($A_k$) du premier signal en bande de base complexe ($b_k$) est obtenue à l'aide d'une transformation de coordonnées du premier signal en bande de base complexe ($b_k$) de la représentation en coordonnées cartésiennes en une représentation de coordonnées polaires caractérisée par l'amplitude ($A_k$) et la phase ($\zeta_k$) de ce signal.

8. Procédé selon la revendication 7, caractérisé en ce que la transformation de coordonnées du premier signal en bande de base complexe ($b_k$) de la représentation en coordonnées cartésiennes dans la représentation en coordonnées polaires est effectuée à l'aide de l'algorithme CORDIC.

9. Procédé selon l'une quelconque des revendications 1 à 6, caractérisé en ce que le carré de l'amplitude ($A_k^2$) du premier signal en bande de base complexe ($b_k$) est formé par élévation au carré distincte de la partie réelle (Re) et de la partie imaginaire (Im) du premier signal en bande de base ($b_k$) avec sommation ultérieure de ces composantes de signal élevées au carré (Re, Im).

10. Procédé selon l'une quelconque des revendications précédentes, caractérisé en ce que, dans l'unité de filtre numérique (2), le signal d'amplitude ou le signal du carré de l'amplitude ($A_k$ ou $A_k^2$) est tout d'abord débarrassé ou au moins approximativement débarrassé de sa composante spectrale à la fréquence nulle et ensuite est soumis à un filtrage passe-haut ou passe-bande et en ce que les paramètres de filtrage du filtre passe-haut ou passe-bande utilisé (21) sont choisis de sorte que les composantes spectrales du signal ne sont que peu ou pas du tout amorties à proximité immédiate de la fréquence d'horloge de rythme estimée $f_{Bd}$.

11. Dispositif de régénération d'horloge de rythme lors de la démodulation de signaux porteurs modulés numériquement en vue de la mise en oeuvre du procédé selon l'une quelconque des revendications précédentes, caractérisé,

- en ce qu'une unité de conversion du signal porteur modulé par un signal de modulation numérique en un premier signal en bande de base complexe, préfiltré, numérique ($b_k$) est prévu, et en ce que cette unité comporte un préfiltre complexe ;
- en ce qu'une non-linéarité (1 ; 1a ; 1b) est prévue en vue de la formation de l'amplitude ($A_k$) ou du carré de l'amplitude ($A_k^2$) du premier signal en bande de base complexe ($b_k$) ;
- en ce que cette non-linéarité (1 ; 1a ; 1b) est reliée côté entrée au préfiltre complexe pour le premier signal en bande de base complexe ($b_k$) et côté sortie à une unité de filtre numérique (2) en vue du filtrage passe-haut ou passe-bande du signal d'amplitude ou du signal du carré de l'amplitude ($A_k$ ou $A_k^2$) ;
- en ce que l'unité de filtre numérique (2) est reliée côté sortie à un filtre de poursuite complexe (3) en vue de l'estimation de la fréquence $f_{Bd}$ et/ou de la phase $\tau$ de l'horloge de rythme ;
- en ce que le filtre de poursuite complexe (3) est relié côté sortie à une unité de génération de signal (4) en vue de la génération de signal d'horloge de rythme (S).

12. Dispositif selon la revendication 11, caractérisé,

- en ce que le filtre de poursuite comporte un mélangeur complexe (30), un premier oscillateur de référence commandé (31), une unité de filtre passe-bas complexe (32), une boucle à verrouillage de phase numérique (33), ainsi qu'un élément de sommation (34) ;
- en ce que le mélangeur complexe (30) est relié côté entrée, d'une part, à la sortie de l'unité de filtre numérique (2) et d'autre part, à la sortie du premier oscillateur de référence (31) et est relié côté sortie à l'unité de filtre passe-bas complexe (32) ;
- que la boucle à verrouillage de phase numérique (33) est reliée côté entrée à l'unité de filtre passe-bas complexe (32) et côté sortie à l'élément de sommation (34) ;
- que la valeur estimée de départ ($m_k$) de fréquence d'horloge de rythme $f_{Bd}$ et de phase $\tau$ est appliquée d'une part à l'entrée de commande du premier oscillateur de référence (31) et d'autre part à l'élément de sommation (34) ;
- que l'élément de sommation (34) est relié côté sortie à l'unité de génération de signal (4).

13. Dispositif selon la revendication 12, caractérisé

- en ce que la boucle à verrouillage de phase numérique (33) comporte un mélangeur en quadrature complexe (330), un second oscillateur de référence (331), un transformateur de coordonnées (332) en vue de la transformation de la représentation en coordonnées cartésiennes en une représentation en coordonnées polaires caractérisée par l'amplitude et la phase, ainsi qu'un filtre de régulation (333) ;
- en ce que le mélangeur en quadrature complexe (330) est relié côté entrée, d'une part, à la sortie de l'unité de filtre passe-bas complexe (32) et d'autre part, à la sortie du second oscillateur de référence (331) et côté sortie est relié au transformateur de coordonnées (332) ;
- en ce que le filtre de régulation (333) est relié côté entrée à la sortie conduisant le signal de phase du transformateur de coordonnées (332) et côté sortie est relié d'une part à l'entrée de commande du second oscillateur de référence (331) et d'autre part à l'élément de sommation (34).

14. Dispositif selon la revendication 13, caractérisé en ce que le transformateur de coordonnées (332) opère selon l'algorithme CORDIC.

15. Dispositif selon l'une des revendications 13 ou 14, caractérisé

- en ce que l'unité de génération de signal (4) comporte un troisième oscillateur commandé (40) ;
- en ce que l'élément de sommation (34) du filtre de poursuite (3) est relié côté sortie à l'entrée de commande du troisième oscillateur (40).

16. Dispositif selon la revendication 15, caractérisé en ce qu'en aval du troisième oscillateur (40) est disposée, côté sortie, une unité de signe (41) et/ou un déphaseur (42).

17. Dispositif selon l'une quelconque des revendications 11 à 15, caractérisé en ce que la non-linéarité (1a) comporte un autre transformateur de coordonnées, qui transforme le premier signal en bande de base ($b_k$) de la représentation en coordonnées cartésiennes en une représentation en coordonnées polaires caractérisée par l'amplitude $A_k$ et la phase $\varphi_k$.

18. Dispositif selon la revendication 17, caractérisé en ce que l'autre transformateur de coordonnées (1a) opère selon l'algorithme CORDIC.

19. Dispositif selon l'une quelconque des revendications 11 à 15, caractérisé

- en ce que la non-linéarité (1b) se compose de deux mélangeurs (10, 11) et d'un autre élément de sommation (12) ;
- en ce que l'autre élément de sommation (12) est relié, côté entrée, aux sorties des deux mélangeurs (10, 11) ;
- en ce que l'un (10) des deux mélangeurs (10, 11) est relié par ses deux entrées à la sortie du préfiltre complexe conduisant la partie réelle (Re) du premier signal en bande de base complexe ($b_k$) et l'autre (11) des deux mélangeurs (10, 11) est relié par ses deux entrées à la sortie du préfiltre complexe conduisant la partie imaginaire (Im) du premier signal en bande de base complexe ($B_k$).

20. Dispositif selon l'une quelconque des revendications 11 à 19, caractérisé en ce que l'unité de filtre numérique (2) se compose d'une unité (20) de suppression des composantes spectrales de signal à la fréquence nulle ainsi que d'un filtre passe-haut ou passe-bande (21) disposé en aval.

21. Démodulateur, en particulier pour ondes courtes, équipé d'un dispositif selon l'une quelconque des revendications 11 à 20.

22. Récepteur, en particulier pour ondes courtes, équipé d'un démodulateur selon la revendication 21 ou d'un dispositif selon l'une quelconque des revendications 11 à 20.

EP 0 579 101 B1

FIG. 1

FIG. 2

FIG. 3

FIG. 4

FIG. 5